(19) Europäisches Patentamt / European Patent Office / Office européen des brevets

(11) **EP 4 029 105 B1**

(12) **FASCICULE DE BREVET EUROPEEN**

(45) Date de publication et mention de la délivrance du brevet:
**18.10.2023 Bulletin 2023/42**

(21) Numéro de dépôt: **20754009.7**

(22) Date de dépôt: **23.07.2020**

(51) Classification Internationale des Brevets (IPC):
**H02J 7/00** *(2006.01)*    **H01M 10/42** *(2006.01)*
**H01M 10/48** *(2006.01)*    **H01M 10/44** *(2006.01)*
**B60L 58/22** *(2019.01)*    **B60L 58/21** *(2019.01)*
**B60L 58/16** *(2019.01)*    **B60L 58/12** *(2019.01)*
**B60L 15/00** *(2006.01)*

(52) Classification Coopérative des Brevets (CPC):
**H02J 7/0016; B60L 15/007; B60L 58/12;
B60L 58/16; B60L 58/21; B60L 58/22;
H01M 10/425; H01M 10/441; H01M 10/482;**
B60L 2240/461; B60L 2240/463; B60L 2240/80;
H01M 2010/4271; H02J 7/0048; H02J 7/005;

(Cont.)

(86) Numéro de dépôt international:
**PCT/FR2020/051350**

(87) Numéro de publication internationale:
**WO 2021/048477 (18.03.2021 Gazette 2021/11)**

(54) **PROCEDE DE COMMANDE D'UNE BATTERIE PERMETTANT DE COMMANDER UN COURANT HOMOGENE SUR LES CELLULES D'UNE LIGNE DE COURANT**

VERFAHREN ZUR STEUERUNG EINER BATTERIE, GEEIGNET ZUM EINSTELLEN EINES HOMOGENEN STROMS ÜBER DIE ZELLEN EINES STROMPFADES

CONTROL METHOD FOR A BATTERY, SUITABLE TO SET A UNIFORM CURRENT THROUGH THE CELLS OF A CURRENT PATH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.09.2019 FR 1909868**

(43) Date de publication de la demande:
**20.07.2022 Bulletin 2022/29**

(73) Titulaires:
• **PSA Automobiles SA**
  **78300 Poissy (FR)**
• **Centre National de la Recherche Scientifique**
  **75016 Paris 16 (FR)**
• **Conservatoire National des Arts et Métiers**
  **75141 Paris Cedex 03 (FR)**
• **SAFT**
  **92300 Lavallois-Perret (FR)**

• **École Normale Supérieure Paris-Saclay**
  **91190 Gif-sur-Yvette (FR)**

(72) Inventeurs:
• **ROY, Francis**
  **91940 LES ULIS (FR)**
• **DITTRICK, Adrien**
  **13190 ALLAUCH (FR)**
• **REVOL, Bertrand**
  **94260 FRESNES (FR)**
• **LABROUSSE, Denis**
  **94230 CACHAN (FR)**
• **PEUCHANT, Thomas**
  **33110 LE BOUSCAT (FR)**

(56) Documents cités:
WO-A1-2018/130020        WO-A2-2014/057192
DE-A1-102014 215 845     US-A1- 2014 035 361
US-A1- 2019 103 750      US-A1- 2019 229 540

EP 4 029 105 B1

(52) Classification Coopérative des Brevets (CPC):
(Cont.)
Y02T 10/64

**Description**

Le domaine de l'invention concerne un procédé de commande d'une batterie électrochimique permettant l'équilibrage de l'état de charge des cellules électriques pour des applications d'électromobilité et de stockage d'énergie stationnaire. L'invention s'applique, mais pas exclusivement, aux batteries Lithium-ion (Li-ion).

De nos jours, les cellules électrochimiques de technologie Lithium-ion sont particulièrement adaptées pour les groupes motopropulseurs à traction électrique du fait qu'elles présentent un rapport intéressant de densité d'énergie et coût du kWh. Comme on le sait les cellules d'énergie constituant les batteries ont des vitesses d'autodécharge différentes entraînant un décalage naturel entre elles. Il s'agit d'un phénomène lent qui à terme, s'il n'est pas compensé, peut limiter la capacité utile de la batterie. Pour corriger ce phénomène, il est connu d'opérer un mécanisme d'équilibrage consistant à aligner toutes les cellules de la batterie sur un même niveau d'état de charge. Cependant, lorsque les cellules sont connectées en série afin d'augmenter la tension de la batterie, le même courant de charge ou de décharge traverse l'ensemble des cellules ce qui ne permet pas d'ajuster unitairement l'état de charge de chaque cellule.

Pour ces cas d'architecture, l'homme de l'art connaît des mécanismes spécifiques d'équilibrage. Une première technique dite d'équilibrage passif consiste à décharger les cellules les plus chargées en connectant temporairement des résistances à leurs bornes. Cette technique présente plusieurs défauts. Elle provoque une perte d'énergie embarquée dans la batterie par dissipation thermique dans les résistances d'équilibrage. Les courants d'équilibrage généralement limités à de faibles valeurs (quelques dizaines voire centaines de milliampères) pour éviter un échauffement excessif des résistances augmentent par conséquent la durée d'équilibrage lorsque la batterie est fortement déséquilibrée. Une deuxième technique dite d'équilibrage actif consiste à transférer l'énergie des cellules les plus chargées vers les cellules les moins chargées en pilotant des courants de transfert de charge entre les cellules. Ces courants d'équilibrage présentent des valeurs légèrement supérieures à la solution passive et sont d'environ quelques ampères. L'avantage de cette technique est qu'elle a pour objectif de conserver l'énergie, cependant son coût est très supérieur à la technique d'équilibrage passif du fait qu'elle requière de l'électronique de puissance dédiée (transformateurs, capacités tampon) pour opérer le transfert d'énergie. De plus, sa mise en oeuvre présente néanmoins des pertes de transfert non négligeables du fait d'un rendement énergétique d'environ 50% à 80%. Les systèmes passifs étant nettement moins coûteux, les constructeurs automobiles optent généralement pour ces derniers.

Dans un module classique de batterie, désigné également par le terme anglais « pack », toutes les cellules sont connectées en série et en parallèle pour former une batterie haute tension. Ce module de batterie est connecté électriquement à un convertisseur externe de type onduleur pour délivrer la tension recherchée à la machine électrique de traction.

On connaît également de l'état de la technique les documents WO2012117110A2 et WO2014145756A1 décrivant des architectures de modules de batterie à commande de puissance intégrée comportant des modules de cellules connectées électriquement en série et parallèle et décrivant des stratégies de gestion de la batterie permettant l'équilibrage des cellules en phase de charge et décharge.

On connaît encore le document US2014035361 A1 correspondant au préambule de la revendication1 et le document WO2018130020A1 décrivant des stratégies de gestion de la batterie.

Par ailleurs, la demanderesse a récemment déposé les demandes de brevet WO2018193173A1 et WO2018154206A1 concernant une architecture de batterie alternative où l'innovation consiste à proposer une architecture de commande intégrée à onduleur au sein même du module de batterie haute tension et dans laquelle chaque cellule électrique, présentant à ses bornes une tension élémentaire nominale comprise entre 2V et 4V (environ 2,2V ou 3,3V à 3,7V selon la technologie choisie, par exemple NMC/LTO ou NMC/Graphite), est associée à une structure de puissance individuelle permettant de piloter individuellement la cellule pour fournir une tension de sortie de ligne générée par paliers d'amplitude égale à la tension élémentaire. Le principe de commande de cette architecture de batterie consiste à chaque instant à connecter à la ligne de courant q cellules en série parmi une pluralité de n cellules au total, où q est le rapport entre la consigne de tension de référence et la tension élémentaire d'une cellule.

Cette architecture présente de nombreux avantages cités ci-après non exhaustivement. Elle est prometteuse en termes de performance et d'autonomie et permet une connexion directe du module de batterie avec un réseau monophasé et triphasé sans recours à un onduleur externe. Elle permet de connecter ou by-passer/contourner (i.e. déconnecter et shunter) individuellement les cellules de manière à déconnecter au besoin une cellule défectueuse sans nécessairement remplacer l'intégralité d'un module de batterie. La structure de commande intégrée permet une commande pleine onde qui occasionne moins de dégradations dans les enroulements d'une machine électrique, réduit les courants de mode commun et élimine les courants de fuite généralement présents dans les architectures classiques. Dans le cas d'un véhicule automobile, cette architecture autorise un fonctionnement dégradé sans immobiliser le véhicule et améliore la gestion en recyclage ou en seconde vie des cellules du fait qu'il est possible de connaître l'état de santé de chaque cellule. En application de stockage d'énergie stationnaire, il est possible de remplacer une cellule défectueuse sans nécessairement arrêter le fonctionnement de la station.

Cependant, en fonction des tensions de référence demandées, il est possible que certaines cellules du système soient isolées pendant des durées plus ou moins longues. Cette architecture a donc tendance à déséquilibrer naturellement des cellules. Par ailleurs, certaines situations de vie des véhicules automobiles requièrent à un même instant un niveau de tension faible et une forte sollicitation de courant, telles par exemple les montées de trottoir. Une grande partie des cellules est donc by-passée lors de la réalisation de la tension de référence. Les cellules peuvent rapidement se retrouver déséquilibrées sur une courte durée.

Un objectif de l'invention vise à améliorer cette dernière architecture de batterie proposée par la demanderesse. Plus précisément, l'invention a pour objectif d'empêcher un déséquilibrage des cellules lors de la génération d'une tension de ligne et plus précisément un procédé de commande garantissant la charge et la décharge homogène des cellules. L'invention a également pour objectif d'améliorer la commande de la batterie pour, au besoin, réajuster l'équilibrage des cellules à tout instant de fonctionnement de la batterie, en charge et décharge électrique, pour des applications en électromobilité et en stationnaire.

Plus précisément, l'invention concerne un procédé de commande d'une batterie à cellules électrochimiques permettant d'équilibrer les courants moyens traversant les cellules, la batterie comportant au moins une ligne de courant, formée par une pluralité n de modules élémentaires de cellule connectés en série, apte à délivrer une forme d'onde en tension, chaque module élémentaire comprenant deux bornes de connexion, au moins une cellule délivrant une tension élémentaire Vcell et un moyen de commutation apte à piloter le module élémentaire dans la ligne de courant en fonction de trois états de pilotage différents permettant respectivement de délivrer aux dites bornes ladite tension élémentaire Vcell, une tension nulle et ladite tension Vcell inversée de sorte à réaliser une forme d'onde en tension, le procédé comportant :

- une étape de pilotage des signaux de commande des modules élémentaires de sorte à fournir la forme d'onde en tension à partir d'une sélection d'un groupe de q modules élémentaires en fonction d'une consigne de tension de référence Vref, où Vref=qVcell.

- La détermination d'un classement des n modules élémentaires, selon l'invention, le procédé comporte en outre le traitement du classement de la pluralité n selon une permutation circulaire des positions des modules élémentaires de sorte que chaque module élémentaire de la pluralité n participe à réaliser la forme d'onde en tension, la permutation circulaire étant exécuté en cas de détection en outre que la consigne de tension de référence Vref est inférieure à un seuil de tension prédéterminé et en cas de détection simultanée d'une consigne de courant de la ligne de courant qui est supérieure à un seuil de courant prédéterminé.

Selon une variante, la permutation circulaire est exécutée à une fréquence de permutation supérieure à la fréquence de la consigne de tension de référence.

Selon une variante, le procédé comporte en outre la détermination de l'état de charge de chaque module élémentaire de la pluralité n et la détermination du classement selon un ordre dépendant de l'état de charge de chaque module élémentaire, et dans lequel le traitement du classement selon la permutation circulaire est exécuté seulement en cas de détection que chaque module élémentaire de la pluralité n présente un écart d'état de charge, par rapport aux autres modules élémentaires, inférieur à un seuil minimum prédéterminé.

Selon une variante, le procédé comporte en outre, en cas de détection qu'au moins un module élémentaire de la pluralité n présente un écart d'état de charge par rapport aux autres modules élémentaires qui est supérieur à un seuil maximum prédéterminé, l'arrêt du traitement du classement selon la permutation circulaire.

Selon une variante, l'étape de détermination du classement est déclenchée selon une période dont la valeur est dépendante de la vitesse de décharge et charge de la batterie sur une durée prédéterminée.

Selon une variante, le procédé comporte en outre, en cas de détection que la capacité restante de la batterie est inférieure à un seuil minimum prédéterminé, l'arrêt du traitement du classement selon la permutation circulaire.

Selon une variante du procédé, en cas de détection de l'arrêt du traitement du classement selon la permutation circulaire, l'étape de pilotage consiste à connecter à la ligne de courant les cellules dudit groupe de q modules élémentaires ayant l'état de charge le plus élevé dans le classement en cas de détection d'un courant de ligne de décharge, et à connecter les cellules dudit groupe de q modules élémentaires ayant l'état de charge le moins élevé dans le classement en cas de détection d'un courant de ligne de charge.

Selon une variante, l'étape de pilotage comporte les sous-étapes suivantes :

- Lorsque le courant de la ligne de courant et la consigne de tension de référence Vref sont de même signe, le pilotage des modules élémentaires de sorte à connecter à la ligne de courant les cellules des modules élémentaires dont la position nk est comprise entre 1 et q,

- Lorsque le courant de la ligne de courant et la consigne de tension de référence Vref sont de signe opposé, le pilotage des modules élémentaires de sorte à connecter à la ligne de courant les cellules des modules élémentaires dont la position nk est comprise entre n-q et n.

Selon une variante, la détermination de l'état de charge de chaque module élémentaire est déclenchée à un instant de commutation de l'état de pilotage dudit chaque module élémentaire et ladite détermination consiste à estimer la variation d'état de charge dudit chaque module entre un premier et un deuxième instant de commutation à partir de l'état de pilotage dudit chaque module entre le premier et le deuxième instant de commutation et de la valeur du courant moyen de la ligne de courant.

Selon une variante, le procédé comporte une étape de diagnostic, par exemple calibrage de la valeur d'état de charge d'un module élémentaire, comportant les sous-étapes successives suivantes :

- En cas de détection d'une demande de diagnostic, l'assignation audit module élémentaire d'une position d'exclusion dans le classement de sorte à exclure ledit module élémentaire dudit groupe de q modules durant une durée d'exclusion prédéterminée,

- L'exécution du diagnostic du module élémentaire durant la durée d'exclusion.

L'invention envisage une unité de commande d'une batterie électrochimique comportant au moins une ligne de courant, formée par une pluralité n de modules élémentaires de cellule connectés en série, apte à délivrer une forme d'onde en tension, chaque module élémentaire comprenant deux bornes de connexion, au moins une cellule délivrant une tension élémentaire Vcell et un moyen de commutation apte à piloter le module élémentaire dans la ligne de courant en fonction de trois états de pilotage différents permettant respectivement de délivrer aux dites bornes ladite tension élémentaire Vcell, une tension nulle et ladite tension Vcell inversée de sorte à réaliser la forme d'onde en tension. L'unité de commande est configurée pour mettre en oeuvre le procédé de commande d'équilibrer les courants moyens traversant les cellules selon l'un quelconque des modes de réalisation précédents.

L'invention prévoit également un système de batterie électrochimique comportant ladite unité de commande.

L'invention prévoit un véhicule automobile comportant un module de traction électrique et ledit système de batterie connecté électriquement au module de traction.

L'invention prévoit en outre une unité de stockage stationnaire d'énergie électrique comportant ledit système de batterie.

L'invention concerne également un produit programme-ordinateur comprenant des instructions qui, lorsque le programme est exécuté par une unité de commande du système de batterie, conduisent celui-ci à mettre en oeuvre l'un quelconque des modes de réalisation du procédé de commande permettant d'équilibrer les courants moyens traversant les cellules.

Le pilotage de l'onde en tension sur la ligne de courant selon le procédé pilote un courant de charge et décharge moyen homogène sur l'ensemble des cellules de la batterie et permet également, lorsqu'un état de déséquilibrage est détecté, d'opérer un équilibrage dynamique des cellules individuellement lors du fonctionnement de la batterie en charge et décharge lors de phases d'accélération, de freinage récupératif et en phase de charge et décharge sur le secteur électrique lorsque le véhicule est connecté à une borne de recharge extérieure. Le procédé s'applique également aux stations fixes connectées au réseau électrique ou fonctionnant en mode îlotage, c'est-à-dire déconnecté du réseau électrique de distribution.

De plus, l'équilibrage est réalisé sous l'action du courant de charge et décharge de la batterie, ce qui améliore la dynamique d'équilibrage au regard des solutions d'équilibrage passives et actives tout en évitant les pertes par effet joule et en réduisant les pertes de rendement.

Par ailleurs, l'architecture électrique de la batterie à onduleurs intégrés permet de cohabiter dans la batterie des cellules de capacités différentes, de réduire des pertes en commutation, de réduire des courants de mode commun dans une machine électrique, d'éliminer des courants de fuite qui génèrent dans des architectures classiques des mécanismes de dégradation des roulements et engrenages par corrosion (« pitting »), de piloter un fonctionnement dégradé sans immobiliser le véhicule et de piloter une commande pleine onde qui occasionne moins de dégradations dans les enroulements machine. L'architecture présente également un rendement élevé en basses puissances et puissance partielle par rapport à une structure classique, la recharge en connexion directe avec un réseau monophasé et triphasé avec équilibrage dynamique des cellules et un équilibrage dynamique réalisé en temps masqué. Il n'y a donc plus besoin de phases de vie liées à l'équilibrage statique des cellules, réalisées généralement en fin de charge de la batterie.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :

[Fig.1] représente schématiquement un système de batterie comprenant une architecture d'onduleur intégré permettant un pilotage individuel d'une cellule électrique apte à mettre en oeuvre le procédé de commande selon l'invention.

[Fig.2] représente un exemple de forme d'onde en tension pouvant être généré par le système de batterie, notamment pour alimenter une machine électrique en tension alternative de forme sinusoïdale.

[Fig.3] représente schématiquement un module fonctionnel de l'unité de commande du système de batterie dont la fonction est d'assurer l'équilibrage des cellules en situation de charge et décharge de la batterie.

[Fig.4] représente un mode de réalisation d'un algorithme de commande d'une batterie permettant d'opérer l'équilibrage des cellules d'une ligne de courant et le maintien de cet état d'équilibre par le procédé de commande selon l'invention.

[Fig.5] est un graphique représentant le courant instantané vu par une cellule d'un module élémentaire lors de la mise en oeuvre du procédé de commande d'équilibrage.

[Fig.6] est un graphique représentant le courant instantané vu par une cellule d'un module élémentaire lorsque le traitement du cyclage en permutation circulaire conformément à l'invention est activé.

[Fig.7] représente un exemple de système de groupe motopropulseur à traction électrique de véhicule automobile comportant un système de batterie à onduleur intégré et plus précisément la chaîne de commande du système de batterie mettant en oeuvre le procédé selon l'invention.

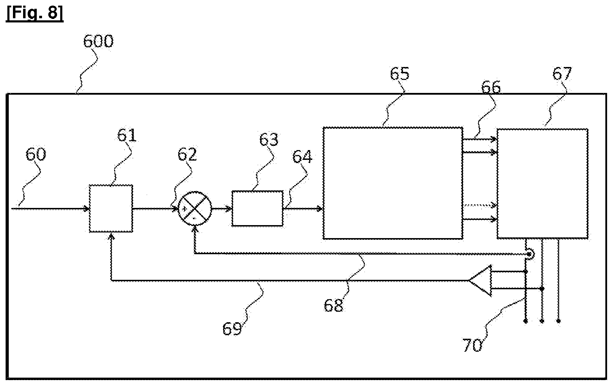

[Fig.8] représente un exemple de système de station de stockage d'énergie électrique pour un réseau haute tension comportant un système de batterie à onduleur intégré et plus précisément la chaîne de commande du système de batterie mettant en oeuvre le procédé selon l'invention.

L'invention s'applique pour les systèmes de batterie constitués de cellules électrochimiques, par exemple de type lithium-ion, où chaque cellule est pilotable individuellement selon l'architecture proposée par la demanderesse dans les demandes de brevet internationales WO2018193173A1 et WO2018154206A1 mentionnées précédemment. Cette architecture est apte à générer des tensions de sortie complexes pouvant prendre la forme de plusieurs types sans recours à un convertisseur de tension supplémentaire et externe au système de batterie, par exemple une tension alternative de forme sinusoïdale connectée électriquement à une machine électrique asynchrone ou synchrone, ou à un réseau électrique monophasé ou triphasé, ou bien encore une tension constante connectée électriquement à une machine électrique à courant continu, un convertisseur de tension de type DC/DC ou une interface de recharge.

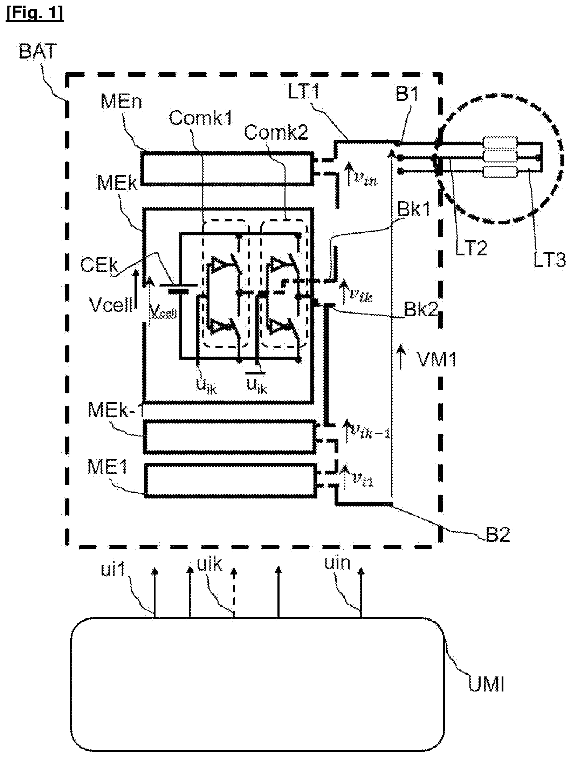

La figure 1 représente schématiquement un mode de réalisation du système de batterie configuré pour appliquer le procédé de commande selon l'invention. Le système de batterie comporte un module de batterie BAT présentant au moins une ligne de courant LT1 et une unité de commande UMI dont la fonction est au moins le pilotage de la forme d'onde en tension de la ligne LT1 en fonction d'une consigne de référence Vref. Selon le mode de réalisation de la figure 1, la batterie BAT comporte trois lignes de courant LT1, LT2, LT3 pouvant produire trois tensions triphasées décalées de $2\pi/3$. Le pilotage de chaque ligne de courant est similaire, se différenciant seulement par un décalage de $2\pi/3$ entre elles. Le procédé de commande selon l'invention a pour objectif de permettre l'équilibrage des cellules électriques d'une même ligne de courant LT1, LT2 ou LT3.

Comme le sait l'homme de l'art, une cellule élémentaire électrique d'une batterie est un accumulateur d'énergie électrique ayant deux bornes, une électrode positive et une électrode négative, et présentant une tension de quelques volts, le plus souvent comprise entre 2V et 4V, généralement 2,2V ou 3,7V environ. Plus précisément, une cellule Lithium-ion est composée en outre d'un séparateur, d'un électrolyte et de collecteurs de courant déposés sur les électrodes. Le principe de fonctionnement d'une cellule Lithium-ion repose sur l'échange réversible d'ions lithium entre les deux électrodes. Lors de la décharge, la cellule fournit de l'énergie électrique, les ions lithium se désinsèrent de l'électrode négative, en libérant un électron, puis migrent et sont transportés à travers l'électrolyte vers l'électrode positive. Les électrons produits à l'électrode négative et consommés à l'électrode positive circulent par un circuit extérieur à la cellule et génèrent un courant électrique, qui alimentera les charges branchées aux bornes de la cellule. Le processus s'inverse lors de la charge. Le procédé de commande s'applique aux autres technologies, telles que les cellules de type Lithium polymère, Nickel Cadmium ou Nickel-Métal-Hydrure.

Un système (ou pack) de batterie est constitué de plusieurs cellules élémentaires agencées de manière à présenter, aux bornes d'une ligne de courant, une tension supérieure à celle d'une cellule élémentaire. Le système de batterie BAT selon la figure 1 présente à ses bornes une tension de plusieurs centaines de volts, de préférence 250V ou plus, mais peut selon les besoins électriques présenter seulement plusieurs dizaines de volts (24V, 36V, 48V par exemple), et adresse notamment les applications pour l'alimentation électrique des machines électriques de traction de véhicule, notamment véhicule automobile équipé d'une machine électrique asynchrone, synchrone ou à courant continu, mais aussi pour les stations fixes de stockage d'énergie pour le réseau électrique haute tension.

Dans le cas d'un groupe motopropulseur de véhicule, la sortie de chaque ligne de courant est destinée à être connectée directement (sans convertisseur de tension) à la ligne de courant d'une, ou plusieurs, machine(s) électrique(s), et à la ligne de courant d'une interface de recharge du véhicule pouvant fonctionner à tension constante ou tension alternative.

Le système de batterie BAT comporte en outre une pluralité n de modules élémentaires ME1, MEk-1, MEk, MEn de cellules électriques, lesdits modules étant montés en série entre deux bornes B1, B2 pour former chaque ligne de courant LT1, LT2, LT3. Les n modules élémentaires sont référencés par un indice k, où k est un entier naturel compris entre 1 et n. Par exemple, n peut être égal à 80 pour former une tension de ligne pouvant atteindre une valeur crête moyenne d'environ 290V sur chaque ligne de courant LT1, LT2, LT3, ou une tension plus basse, par exemple d'environ 240V à partir d'un groupe q de modules élémentaires, où q est inférieur à n. Dans un souci de simplification, un seul module élémentaire est représenté en détail.

Plus précisément, chaque module élémentaire MEk comprend deux bornes de connexion Bk1, Bk2, au moins une cellule élémentaire électrique CEk délivrant une tension élémentaire Vcell reliée entre lesdites bornes, un moyen de commutation comk1, comk2 apte à configurer le module élémentaire MEk dans trois états différents délivrant respectivement ladite tension élémentaire Vcell, une tension nulle et ladite tension Vcell inversée auxdites bornes de connexion Bk1, Bk2. Chaque module élémentaire MEk comporte une unique cellule élémentaire.

En variante deux cellules élémentaires, ou plus, sont connectées électriquement au sein d'un même module élémentaire, directement et de façon permanente en parallèle et/ou en série entre elles. De cette manière, un tel groupe de cellules élémentaires présente deux bornes de connexion connectées électriquement au moyen de commutation cmk1, comk2 de manière à délivrer la tension aux bornes du groupe de cellules élémentaire, une tension nulle et ladite tension inversée aux bornes de connexion Bk1, Bk2 du module élémentaire. Dans l'éventualité que plusieurs cellules élémentaires sont connectées en série dans un unique module élémentaire MEk, ce module élémentaire comprend également un moyen d'équilibrage conventionnel desdites cellules en série du dudit module élémentaire.

Le moyen de commutation est par exemple constitué de deux modules élémentaires de commutation comk1, comk2 formant un pont en H pilotable dans les trois états différents par un signal de commande uik de l'unité de commande UMI de la batterie BAT, réalisant la fonction de « DRIVER » selon le terme anglophone. Les états sont représentés par une variable de commande uik pouvant prendre par exemple les valeurs 1, 0, -1 représentant les trois états différents commandant respectivement ladite tension élémentaire Vcell, une tension nulle et ladite tension inversée -Vcell auxdites bornes de connexion Bk1, Bk2 du module élémentaire indexé k. Comme cela est illustré par la figure 1, chaque module élémentaire de commutation comprend deux composants électroniques, tels que des transistors de puissance, éventuellement de type MOSFET ou HEMT (« High Electron Mobility Transistor » en anglais), pilotés par les signaux ui1 à uin de l'unité de commande UMI. Ainsi, la tension vik aux bornes Bk1, Bk2 de chaque module élémentaire MEk peut être pilotée en fonction du signal de commande uik selon la relation suivante :

[Math 1]

$$u_{ik} = \begin{cases} 1, & v_{ik} = V_{Cell} \\ 0, & v_{ik} = 0 \\ -1, & v_{ik} = -V_{Cell} \end{cases} \quad k = 1..n$$

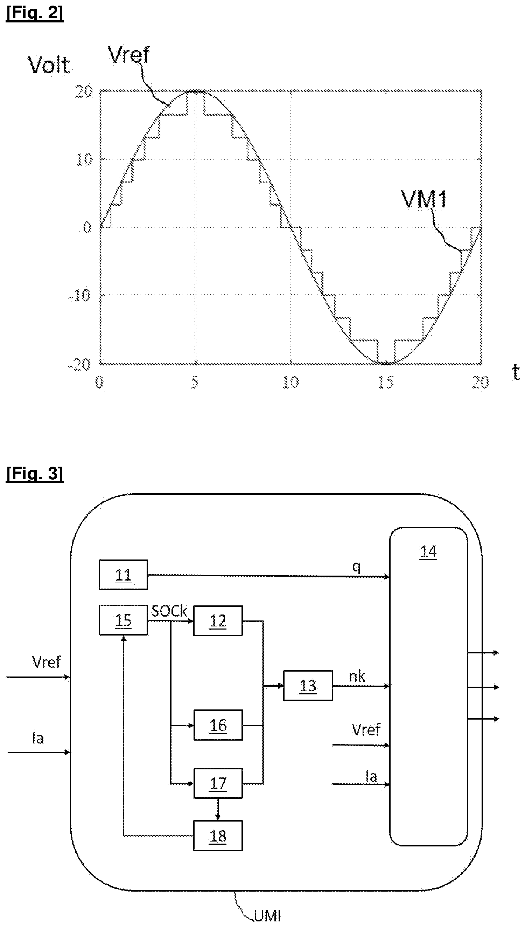

En figure 2, on a représenté un exemple de forme d'onde en tension pouvant être délivrée par la batterie BAT sur la ligne de courant LT1. Dans cet exemple non limitatif, la consigne de tension de référence Vref est de forme sinusoïdale et la tension de phase VM1 de la ligne de courant LT1 est formée par paliers d'amplitude égale à la tension élémentaire Vcell. Toute forme d'onde en tension peut être pilotée par l'unité de commande, par exemple sinusoïdale de fréquence 50hz ou de tension constante par exemple.

Nous décrivons maintenant les moyens fonctionnels de l'unité de commande UMI permettant la mise en oeuvre du procédé de commande selon l'invention pour assurer l'équilibrage d'état de charge des cellules d'une même ligne de courant. Cette mise en oeuvre peut se faire au moyen de l'unité de commande UMI de la batterie BAT, pouvant être intégrée ou constituée le calculateur de gestion de la batterie BMS (« Battery Management System » en anglais) dans une architecture décentralisée, comme illustré non limitativement sur la figure 1. Mais cela n'est pas obligatoire. En effet, le procédé pourrait être implanté dans un module externe au BMS, par exemple au sein même d'un module élémentaire MEk selon une architecture décentralisée, tout en étant couplé à cette dernière. Dans ce dernier cas, le module externe peut être lui-même agencé sous la forme d'un calculateur dédié comprenant un éventuel programme dédié. Par conséquent, le module de mise en oeuvre du procédé de commande de la batterie, selon l'invention, peut être réalisé sous la forme de modules logiciels (ou informatiques (ou encore « software »)), ou bien de circuits électroniques (ou « hardware »), ou encore d'une combinaison de circuits électroniques et de modules logiciels.

En figure 3, on a représenté plus précisément un module fonctionnel de l'unité de commande UMI de la batterie BAT dont la fonction est de piloter les signaux de commande uik de chaque module élémentaire MEk.

L'unité de commande UMI est apte à recevoir en paramètre d'entrée une consigne de tension de référence Vref et une valeur de courant la de la ligne de courant (une consigne ou une mesure). En réponse à la consigne de tension Vref, un courant de ligne est généré traversant chaque module élémentaire connecté à la ligne de courant. Le courant de ligne peut être un courant de charge et un courant de décharge (à composante active et/ou réactive). Dans le cas d'une tension de référence alternative, le courant de ligne peut être en phase ou déphasé de la tension de référence d'une valeur de déphasage comprise entre -90° et 90° selon le comportement électrique (résisto-inductif) du réseau électrique (secteur ou réseau embarqué du véhicule) connecté à la, ou chaque, ligne de courant de la batterie.

Un premier module 11 est apte à déterminer à chaque instant le nombre q de modules élémentaires nécessaires parmi la pluralité n pour réaliser la forme d'onde en tension pour chaque phase en tension quantifiée ViM demandée par la consigne Vref et où toutes les cellules élémentaires ont une même tension élémentaire Vcell en fonction de la relation suivante :

[Math 2]

$$V_{iM} = V_{Cell} \cdot \sum_{k=1}^{q} u_{ik} \quad avec \quad \sum_{k=1}^{n} u_{ik} = q$$

Un deuxième module 12 est apte à assigner à chaque module élémentaire MEk une position nk dans un classement 13 (table, liste ou index) enregistré en mémoire de l'unité de commande UMI. Ce classement 13 est dynamique et modifiable par l'unité de commande UMI et enregistre la position nk de chacun des modules élémentaires MEk à chaque instant. Ainsi, grâce au classement dynamique il est possible d'obtenir une même tension à partir de différentes combinaisons de commande uik des modules élémentaires.

L'objet de l'invention est de modifier ce classement 13 lors de la réalisation d'une onde en tension d'une ligne de courant en charge et décharge de la batterie de manière à conserver l'équilibrage d'état de charge des cellules.

A cet effet, l'unité de commande comporte un module 16 dont la fonction est d'opérer un traitement du classement de la pluralité n selon une permutation circulaire des positions nk des modules élémentaires MEk de sorte que chaque module élémentaire de la pluralité n participe à réaliser la forme d'onde en tension. La permutation consiste à décaler la position des modules élémentaires dans le classement. Du fait que le nombre q de modules élémentaires nécessaires pour réaliser la forme d'onde est inférieur au nombre n total de modules disponibles, à chaque instant des modules sont shuntés tandis que d'autres sont traversés par le courant de ligne. Le cyclage du classement opère une action de hachage du courant traversant chaque cellule non shuntée. Le cyclage est particulièrement intéressant lorsque les cellules ont atteint un équilibre d'état de charge entre elle sur une période donnée pour égaliser les courants moyens les traversant sur une période de la tension de référence. De même, le cyclage permet de réduire l'impact de fortes sollicitations de courant et lorsque peu de cellules sont sollicitées (q faible par rapport à n) pour réaliser la forme d'onde en tension, notamment en cas de montée de trottoir pour un véhicule automobile. On évite ainsi d'accentuer un éventuel déséquilibre déjà existant.

Dans tous les cas, le module 16 est judicieusement activé lorsque q est inférieur à n pour la formation d'onde en tension susceptible d'être générée sur une durée importante, plusieurs dizaines de minutes, voire plusieurs heures.

Ainsi, le déclenchement du cyclage par le module 16 selon la permutation circulaire peut être dépendant d'un écart d'état de charge entre les modules élémentaires MEk par rapport à un seuil prédéterminé, ou bien encore en fonction d'une valeur de consigne de courant par rapport à la valeur du niveau de tension demandé.

Plus précisément, le module 16 modifie la table de classement 13 selon la relation algorithmique suivante :

[Math 3]

$$n_k \leftarrow (n_k + 1) \bmod n$$

Le cyclage des positions nk dans la liste totale des n modules élémentaires s'effectue lorsque q est inférieur à n et à des fréquences de permutation supérieures à la fréquence du signal Vref, par exemple environ 1 kHz pour une tension de référence Vref de fréquence 50Hz. Le rapport entre la fréquence de permutation et la fréquence du signal de tension peut être différent et sera choisi en fonction des pertes joules en commutation au regard de la baisse d'impédance interne de la batterie. La fréquence de permutation est configurée pour assurer la permutation complète des n modules sur une durée prédéterminée, c'est-à-dire que chaque module a été positionné dans le classement à chacune des positions successivement sur ladite durée. La durée prédéterminée est égale ou inférieure à la période de la tension électrique de la ligne de courant.

On a observé que le cyclage permet de réduire la valeur d'impédance interne d'une cellule électrique, de l'ordre d'environ 30% pour une cellule de technologie Lithium Phosphate de Fer. Il est ainsi possible d'adapter la fréquence de permutation à la technologie des cellules choisies. Ainsi donc, en variante, la fréquence de permutation de la permutation circulaire peut être dépendante de la valeur de l'impédance interne de la cellule de chaque module élémentaire.

Par ailleurs, un autre objectif de l'unité de commande est de réaliser un équilibrage dynamique des cellules avant, simultanément ou après le cyclage des cellules selon la permutation circulaire. Lorsque les cellules d'une ligne de courant sont déséquilibrées, ou pour garantir un niveau d'équilibrage avant d'opérer le cyclage, l'unité de commande UMI comporte des moyens pour opérer un équilibrage des cellules.

A cet effet, la position nk de chaque module élémentaire MEk est de préférence dépendante du niveau d'état de charge SOC de chaque module élémentaire pour permettre un équilibrage des cellules à tout instant de fonctionnement de la batterie. Toutefois, on n'écarte pas la possibilité que le classement soit obtenu sur la base d'une valeur représentative de l'état de vieillissement d'une cellule, ou de façon plus générale de tout paramètre représentatif d'un état de fonctionnement spécifique à une cellule définissant l'intervention d'une cellule pour la formation d'une onde en tension.

Dans un mode de réalisation préférentiel, le classement 13 a pour fonction d'enregistrer une liste des modules élémentaires par ordre croissant ou décroissant d'état de charge SOC. Pour le classement par ordre décroissant, le module élémentaire MEk ayant l'état de charge le plus élevé, le module 12 attribue la position nk=1, et ainsi de suite jusqu'à la position nk=n pour le module élémentaire ayant l'état de charge le plus faible.

En outre, chaque module élémentaire MEk est pilotable individuellement par un module 14 dans lesdits trois états différents (+1, 0, -1), et conformément au procédé le module 14 est configuré pour piloter les modules élémentaires de manière à connecter à la ligne de courant un groupe de q modules élémentaires MEk ayant l'état de charge SOC le plus élevé dans le classement 13 en cas de détection d'un courant de décharge traversant la ligne de courant LT1, et à connecter ledit groupe de q modules élémentaires MEk ayant l'état de charge le moins élevé dans le classement en cas de détection d'un courant de charge traversant la ligne de courant LT1. Les q modules ont des positions successives dans le classement 13.

Par convention, on définit les notions suivantes :
Le courant de ligne est un courant de décharge lorsque le courant et la tension ont le même signe, c'est-à-dire à un instant donné la tension de référence et le courant de ligne sont tous deux de signe positif ou de signe négatif.

Le courant de ligne est un courant de charge lorsque le courant et la tension sont de signe opposé, c'est-à-dire qu'à un instant donné, la tension de référence est de signe positif et le courant de ligne est négatif, ou la tension de référence est de signe négatif et le courant de ligne est positif.

Un courant de ligne est positif lorsque le courant est sortant vers le circuit électrique et le courant de ligne est négatif lorsque le courant est entrant vers la batterie.

Le signe de la tension est référencé par rapport aux bornes B1, B2 de la ligne de courant de la batterie où la borne B1 est reliée à une borne de phase du circuit électrique (borne enroulement machine électrique ou borne de phase réseau électrique) et la borne B2 à une borne neutre. Dans le cas d'un circuit à tension continue, la borne B1 est la borne positive et la borne B2 est la borne négative ou de masse de la batterie.

Ce mode de pilotage de l'onde en tension sur la ligne de courant permet d'opérer un équilibrage dynamique des cellules individuellement lors du fonctionnement de la batterie en pilotant un courant de charge et décharge traversant la ligne de courant. De plus, l'équilibrage est réalisé sous l'action du courant de charge et décharge de la batterie de l'ordre de plusieurs dizaines d'ampères, voire plusieurs centaines, ce qui améliore la dynamique d'équilibrage au regard des solutions connues d'équilibrage passif et actif où les courants d'équilibrage sont de seulement quelques ampères, qui elles présentent des pertes par effet joule et donc des pertes de rendement. Le courant de charge/décharge est un courant traversant la ligne de courant de la batterie lorsque celle-ci est connectée au réseau électrique du véhicule ou du secteur.

Selon une variante de commande de la batterie, le module 14 est configuré de sorte que le classement consiste à assigner une position nk à chaque module élémentaire MEk comprise entre 1 et n dans une liste par ordre décroissant d'état de charge, et à chaque instant l'étape de pilotage des modules élémentaires comporte les sous-étapes suivantes :

- La détermination du courant de ligne la de la ligne de courant LT1,

- Lorsque le courant de ligne la et la consigne de tension de référence Vref sont de même signe, le pilotage des modules élémentaires MEk de sorte à connecter à la ligne de courant les modules élémentaires MEk dont la position nk est comprise entre 1 et q,

- Lorsque le courant de ligne et la consigne de tension de référence sont de signe opposé, le pilotage des modules élémentaires MEk de sorte à connecter à la ligne de courant les modules élémentaires dont la position nk est comprise entre n-q et n.

On rappelle qu'à chaque instant, l'unité de commande UMI connecte q cellules (q ≤ n) où q est le rapport entre la tension de référence Vref désirée à cet instant en sortie de ligne et la tension élémentaire de cellule Vcell.

Ainsi, l'état de chaque variable de commande des modules élémentaires est pilotable par le module 14 selon la relation algorithmique suivante où le classement est indexé par ordre décroissant d'état de charge :

[Math 4]

$$
if\ sign\left(V_{ref_i}(t)\right) == sign(i_i(t)) \qquad u_{ik} = \begin{cases} 1 & if\ V_{ref\_i}(t) > n_k \cdot V_{Cell} \\ -1 & if\ V_{ref\_i}(t) < -n_k \cdot V_{Cell} \\ 0 & otherwise \end{cases}
$$

$$
otherwise \qquad u_{ik} = \begin{cases} 1 & if\ V_{ref\_i}(t) > (n - n_k) \cdot V_{Cell} \\ -1 & if\ V_{ref\_i}(t) < -(n - n_k) \cdot V_{Cell} \\ 0 & otherwise \end{cases}
$$

Où nk est la position de chaque module dans le classement, Vcell est la tension élémentaire d'une cellule et $V_{refi}$ et $i_i$ sont la consigne de tension de référence et le courant de ligne (ampère) de chaque ligne de courant référencée i, ou i est par exemple compris entre 1 et 3 pour respectivement chaque ligne de courant d'une tension triphasée.

L'homme du métier saura bien entendu configurer le classement par ordre d'état de charge croissant et modifier en conséquence la relation algorithmique permettant le pilotage de chaque module élémentaire MEk.

Par ailleurs, il est envisageable que le module 12 puisse assigner une position nk en fonction, en plus de l'état de charge SOC, d'un critère qui est dépendant de l'état de vieillissement de chaque module élémentaire ou de la capacité résiduelle de chaque module élémentaire. Par exemple, pour des modules d'état de charge équivalent, il est envisageable d'opérer le classement en prenant en compte l'état de vieillissement pour activer en priorité les modules plus jeunes ou de capacité résiduelle totale supérieure par rapport aux modules présentant une fatigue plus avancée.

En outre, un module 15 est apte à déterminer l'état de charge SOCk de chaque module élémentaire MEk à chaque instant. L'état de charge SOCk correspond à une capacité électrique contenue dans la cellule d'un module élémentaire MEk, exprimée en A.s, A.h (Ampère par seconde ou Ampère par heure) ou bien encore usuellement en pourcentage de charge par rapport à une capacité totale réelle à un instant t.

La détermination de l'état de charge SOCk est calculée par une première méthode coulométrique. Comme cela est bien connu de l'homme de l'art, l'estimation par mesure coulométrique est opérée à partir d'un état de charge initial connu de référence, par exemple état de charge complet correspondant à 100% du SOC pour une capacité totale connue à l'instant d'évaluation pour un état de vieillissement connu, et à partir de la variation de charge mesurée par un capteur de courant de la ligne de courant. Les algorithmes d'évaluation de l'état de santé d'une cellule électrochimique sont bien connus de l'homme du métier et peuvent être mis en oeuvre par l'unité de commande du système de batterie BAT.

Avantageusement, le module 14 est configuré pour déterminer l'état de charge SOC de chaque module élémentaire MEk à un instant de commutation de l'état de pilotage de chaque module élémentaire. A cet effet, le module 14 estime la variation d'état de charge de chaque module MEk entre un premier et un deuxième instant de commutation à partir de l'état de pilotage uik de chaque module MEk et de la valeur du courant moyen de la ligne de courant. Grâce à cette méthode, il n'est ainsi pas nécessaire d'équiper la batterie d'un capteur de courant pour chaque cellule. La variable logique de commande uik est connue à tout instant et permet ainsi, uniquement à partir de la mesure du courant de la ligne, d'estimer l'état de charge par un calcul d'intégration sur la période entre les deux instants de commutation. Cette période peut être fixe ou variable. On entend par commutation d'état de pilotage la commande de pilotage correspondant à un rafraichissement de l'état de pilotage d'un module élémentaire MEk et couvre la situation de changement d'un premier état de pilotage parmi les états +1, 0, -1 vers un deuxième état différent parmi ces mêmes états ou, d'un état de pilotage parmi les états +1, 0, -1 vers ce même état.

Cette première méthode coulométrique présente néanmoins un désavantage, car au fil du temps elle est susceptible d'entrainer une erreur d'estimation du SOC augmentant au fur et à mesure des calculs. Il est donc prévu en outre que l'unité de commande UMI comporte un module 18 apte à exécuter un recalage ou calibrage de l'estimation de l'état de charge de chaque cellule des modules élémentaires, ou bien encore tout autre type de diagnostic comme par exemple une évaluation de l'état de vieillissement.

Selon une variante consistant à calibrer l'état de charge lorsque la précision n'est plus garantie par la méthode coulométrique, le module 18 est apte à estimer la tension à vide d'une cellule lors d'une phase de relaxation de la cellule (principe basé sur les filtres de Kalman ou valeurs tabulées éventuellement). Les techniques d'estimation de la tension à vide sont bien connues de l'homme du métier et ne font pas précisément l'objet de l'invention. Comme on le sait certaines méthodes requièrent plusieurs dizaines de minutes pour observer la stabilisation de la tension au repos et obtenir une valeur fiable de la tension à vide et donc de son état de charge SOC. D'autres méthodes par modélisation peuvent s'exécuter en un temps inférieur mais requièrent des ressources de calculs plus importantes.

Quelle que soit la méthode d'estimation de la tension à vide, l'unité de commande UMI comporte un module 17 configuré pour assigner, à tout instant, à chaque module élémentaire MEk une position d'exclusion dans le classement 13 de sorte à exclure ledit module élémentaire dudit groupe de q modules durant une durée d'exclusion prédéterminée. Ainsi, grâce au module 17, il est possible de by-passer temporairement une cellule électrique individuellement, indépendamment de la valeur de son état de charge, pour opérer un diagnostic ou calibrage en temps masqué, sans affecter le fonctionnement normal de la batterie. Il est envisageable que l'action d'exclusion du module 17 soit déclenchée pour tout type de diagnostic requérant la désactivation du module élémentaire concerné, que ce soit la calibration de l'état de charge ou l'évaluation de l'état de vieillissement d'une cellule par exemple.

On notera que la durée d'exclusion est dépendante de la durée nécessaire pour opérer le diagnostic. Une fois que la position d'exclusion est assignée, nk supérieur à q en décharge et nk inférieur à n-q en charge, le module 18 est autorisé à exécuter la méthode d'évaluation de la tension à vide pour le module élémentaire associé. On notera que l'action du module 17 est fonction de l'état d'un drapeau ou indicateur (« flag » en anglais) s'activant lorsque la précision de l'état de charge n'est pas garantie par l'unité de commande. L'indicateur s'active, par exemple état haut, pour demander un recalage du SOC. L'indicateur se désactive, état bas, lorsque le recalage est effectué.

On ajoutera que le classement 13 des modules élémentaires par ordre d'état de charge est actif à tout instant du fonctionnement de la batterie, en charge, décharge, de manière à garantir l'équilibrage des cellules d'une ligne de courant sans protocole de surveillance dédié. La fréquence du classement par ordre d'état de charge est configurée en fonction d'une durée prédéterminée ou en fonction de la vitesse de décharge/charge de la batterie, par exemple dans une plage comprise entre 1 seconde et 5 minutes, ou pour une variation de proportion prédéterminée de la capacité totale de la batterie, par exemple chaque 1% de SOC déchargé/chargé (c'est-à-dire chaque centième de la capacité par rapport à la capacité totale de la batterie).

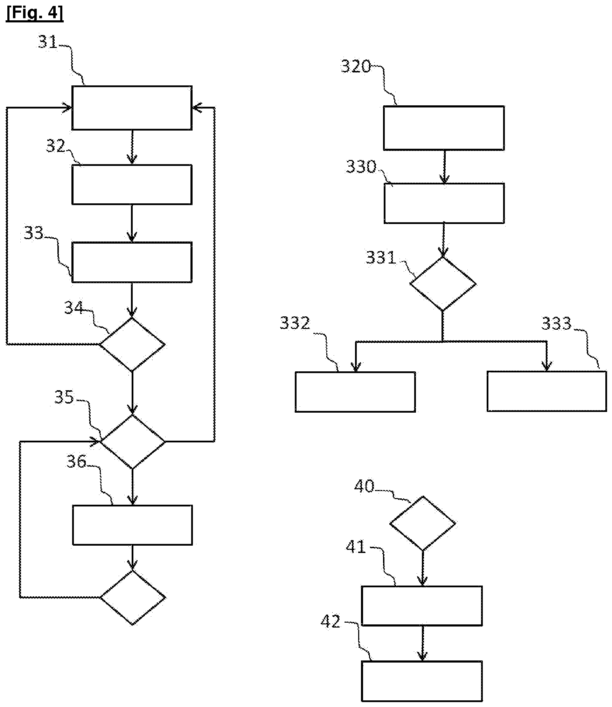

En figure 4, on décrit un synoptique d'algorithme décrivant un mode de réalisation du procédé de commande d'une batterie permettant l'équilibrage et le maintien de l'équilibrage des cellules d'une ligne de courant. Les étapes d'équilibrage du procédé sont préférentiellement opérées avant le traitement de cyclage de manière à assurer un état initial d'équilibrage. Toutefois, cette séquence n'est pas obligatoire et le cyclage, relatif à l'étape 36, peut être activé dès que l'unité de commande détecte un état d'équilibrage des cellules suffisant, par exemple un écart d'état de charge entre les cellules qui est inférieur à un seuil prédéterminé.

De préférence, le procédé comporte tout d'abord les étapes suivantes assurant un équilibrage des cellules :

- une étape de détermination 31 de l'état de charge de chaque module élémentaire MEk de la pluralité n,

- puis une étape détermination 32 d'un classement des n modules élémentaires selon un ordre dépendant de l'état de charge de chaque module élémentaire,

- puis une étape de pilotage 33 des signaux de commande des modules élémentaires MEk de sorte à fournir, à tout instant t, la forme d'onde en tension de la ligne de courant à partir d'une sélection d'un groupe de q modules élémentaires en fonction de la consigne de tension de référence Vref, où Vref=qVcell.

L'étape de détermination 31 n'est pas limitative à l'état de charge d'une cellule. On rappelle que le classement 13 peut être obtenu à partir de la valeur de tout paramètre de fonctionnement spécifique à une cellule, par exemple état de vieillissement, capacité résiduelle ou bien encore par position électrique dans la ligne de courant.

Plus précisément, selon une variante préférentielle du procédé, cette étape de pilotage 33 consiste à connecter à la ligne de courant ledit groupe de q modules élémentaires, successifs dans le classement, ayant l'état de charge le plus élevé dans le classement en cas de détection d'un courant de ligne de décharge, et à connecter ledit groupe de q modules élémentaires ayant l'état de charge le moins élevé dans le classement en cas de détection d'un courant de ligne de charge.

Cette étape s'exécute grâce à l'invention lors de phase de fonctionnement de la batterie en charge et décharge sous l'action du courant de charge et décharge, garantissant ainsi une dynamique d'équilibrage supérieure aux solutions passives et actives décrites dans l'état de la technique. Le courant de ligne et la consigne de tension sont des signaux alternatifs de forme sinusoïdale prenant des valeurs positives et négatives sur une période. Le procédé conserve ainsi l'équilibrage des cellules à tout instant de fonctionnement d'un véhicule du fait de la prise en compte du sens du courant

EP 4 029 105 B1

pour détecter les phases de charge et décharge sur au moins une période de phase, notamment lors de la succession de phases d'accélération et de freinage récupératif. La commande de l'équilibrage est bien entendu applicable identiquement pour une batterie de véhicule connectée à un réseau électrique via la borne de recharge ou pour une application stationnaire, notamment dans le cas de processus de commande dit « Smart Grid » pour la gestion d'un réseau où des phases de charge et décharge sont commandées.

Ainsi, sur une période de la tension de référence, un module élémentaire de charge importante relativement aux autres modules (par exemple nk=1) sera soumis à un courant de décharge uniquement, tandis qu'un module de charge faible par rapport aux autres modules (par exemple nk=n) sera soumis à un courant de charge uniquement.

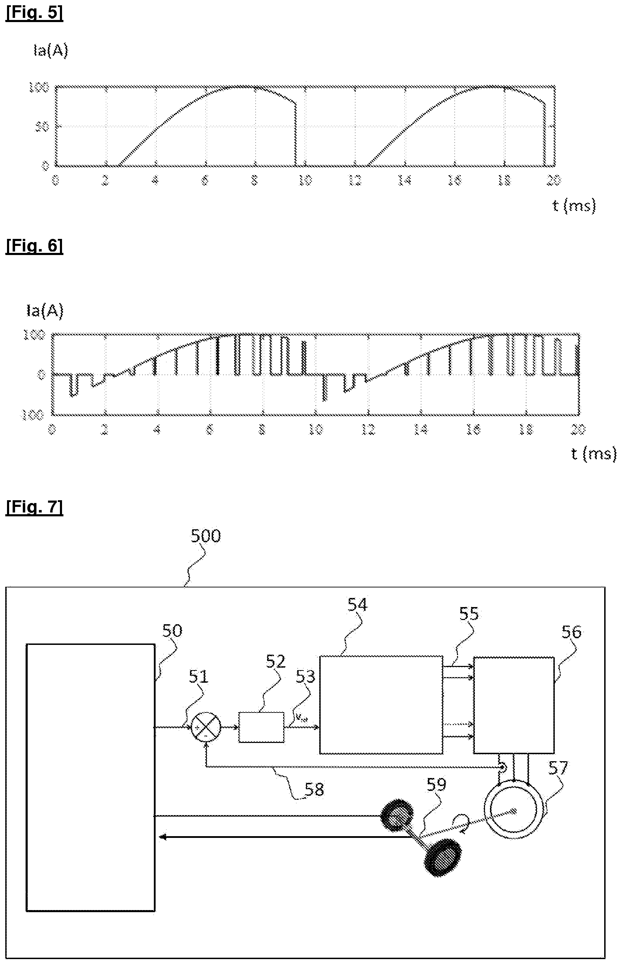

Pour illustrer cet exemple, on a représenté en figure 5 le courant instantané Ia d'une cellule d'un module élémentaire de position nk=10 lors de l'exécution du procédé de commande pour un exemple d'architecture de batterie. Sur l'axe des ordonnées est représentée la valeur du courant de charge en ampère et sur l'axe des abscisses le temps t en millisecondes.

Dans cet exemple, la ligne de courant est équipée de 80 modules élémentaires montés en série, la tension Vcell unitaire est égale à 3,3V, la tension de référence sinusoïdale présente une amplitude de 264V et le courant sinusoïdal est égal à 100A. La tension et le courant présentent un déphasage de 45° en considération du comportement inductif des enroulements machine et de son point de fonctionnement. Comme on le voit sur cette figure, le courant vu par la cellule est de forme partiellement sinusoïdale et reste de signe positif sur une même période, car la cellule du module élémentaire est connectée à la ligne uniquement lorsque le courant de ligne est un courant de décharge. En effet, sa position relativement basse dans la liste (état de charge élevé) l'expose à des courant de décharge uniquement. On notera que le courant vu par un module élémentaire dépend donc de la valeur d'état de charge de la cellule du module élémentaire, et du déphasage entre la consigne de tension et le courant de ligne. En cas de déphasage nul, le courant sera de valeur continue sans coupures.

Ensuite, selon le procédé, en cas de détection, à une étape de 34, d'activation d'une condition de réordonnancement du classement, durée depuis le précédent ordonnancement supérieure à une durée prédéterminée, ou éventuellement une variation d'état de charge depuis le précédent ordonnancement supérieur à un seuil prédéterminé, les étapes 31 et 32 sont de nouveau exécutées. La durée prédéterminée peut être comprise entre une ou plusieurs minutes par exemple, afin de réduire les pertes d'énergie liées aux actions de commutation des transistors.

Selon une variante du procédé, représentée en figure 4, l'étape de classement 32 consiste, à une sous étape 320, à assigner une position nk à chaque module élémentaire comprise entre 1 et n dans une liste par ordre décroissant d'état de charge et l'étape de pilotage 33 comporte les sous-étapes successives suivantes :

- La détermination 330 du signe du courant de la ligne de courant pour ensuite comparer à une étape 331, le signe du courant et le signe de la tension de référence pour détecter si la ligne présente un courant de charge ou décharge.

- Lorsque le courant et la consigne de tension de référence sont de même signe (c'est-à-dire courant de décharge), le pilotage 332 des modules élémentaires de sorte à connecter à la ligne de courant les modules élémentaires dont la position nk est comprise entre 1 et q.

- Lorsque le courant et la consigne de tension de référence sont de signe opposé (c'est-à-dire courant de charge), le pilotage 333 des modules élémentaires de sorte à connecter à la ligne de courant les modules élémentaires dont la position nk est comprise entre n-q et n.

On envisage en outre que le classement par ordre d'état de charge effectué par le module 12 peut être désactivé si l'unité de commande UMI détecte que les cellules sont équilibrées, c'est-à-dire que l'écart d'état de charge entre chaque cellule est inférieur à un seuil minimal prédéterminé.

On précise que les étapes 31, 32, 33, 34 du procédé de commande ne sont pas obligatoires. L'équilibrage des cellules peut être obtenu au moyen de tout type de méthode d'équilibrage, notamment par une méthode passive ou active telle que décrite dans l'état de la technique.

A une étape 35, conformément au procédé de commande selon l'invention, si l'unité de commande détecte que les cellules sont équilibrées, le module 16 est activé pour opérer à une étape 36 la permutation circulaire du classement de sorte que chaque module élémentaire de la pluralité n participe à réaliser la forme d'onde en tension. La permutation circulaire garantie la même sollicitation en courant moyen pour toutes les cellules sur une période de la tension de référence. La permutation s'exécute lorsque q est inférieur à n. La permutation circulaire est active tant que les cellules sont équilibrées et est réalisée à une fréquence de permutation supérieure à la fréquence de la consigne de tension de référence Vref, par exemple 1kHz pour une tension de référence de 50Hz.

En variante de l'étape 35, le module 16 est activé en cas de détection en outre que la consigne de tension de référence est inférieure à un seuil de tension prédéterminé et en cas de détection simultanée d'une consigne de courant supérieur à un seuil de courant prédéterminé. Cette stratégie vise à répondre spécifiquement aux fortes sollicitations

12

de courant lorsqu'un nombre faible de cellules est sollicité pour réaliser la forme d'onde en tension. Cette activation vise à empêcher un déséquilibre des cellules.

Le classement 32 par ordre d'état de charge peut être activé simultanément au traitement de permutation circulaire 36, ou l'un ou l'autre seulement durant une période donnée.

En figure 6, on a représenté un graphique illustrant le courant instantané la d'une cellule d'un module élémentaire de position nk=10 lors de l'exécution du cyclage pour un exemple d'architecture de batterie. Sur l'axe des ordonnées est représentée la valeur du courant de charge en ampère et sur l'axe des abscisses le temps t en millisecondes.

Dans cet exemple, identiquement à l'exemple de la figure 5, la ligne de courant est équipée de 80 modules élémentaires montés en série, la tension Vcell unitaire est égale à 3,3V, la tension de référence sinusoïdale présente une amplitude de 264V et le courant sinusoïdal est égal à 100A. La tension et le courant présentent un déphasage de 45° en considération du comportement inductif des enroulements machine et de son point de fonctionnement.

Comme on le voit sur cette figure, le courant vu par la cellule est de forme partiellement sinusoïdale du fait que celle-ci est activée lorsque le niveau de la tension de référence est supérieur à dix fois la tension élémentaire Vcell en valeur absolue. On observe un hachage du courant résultant du positionnement cyclé de la cellule dans des positions du classement non demandée (position commandant un état shunté) lors de la génération de l'onde en tension. Le cyclage en permutation circulaire selon le nombre total des cellules permet de minimiser les pertes thermiques, réduire la résistance interne de chaque cellule et d'égaliser la valeur du courant moyen de toutes les cellules durant la période du cyclage.

Enfin à l'étape 35 du procédé, en cas de détection d'un déséquilibre d'état de charge et d'une demande de désactivation de la permutation circulaire, le procédé retourne à l'étape 31 pour opérer un équilibrage des cellules. Cette situation est détectée lorsqu'un écart d'état de charge entre au moins une des cellules des autres cellules est supérieur à un seuil maximal prédéterminé.

Dans une variante, lorsque la capacité restante de la batterie (ou autonomie résiduelle du véhicule par exemple) est inférieure à un seuil prédéterminé, le classement par ordre d'état de charge est activé. Dans ce cas, le classement par ordre d'état de charge et le pilotage d'équilibrage associé est maintenu actif jusqu'à ce que la capacité restante de la batterie atteint une limite minimum, par exemple inférieur à 10% ou quelques pourcents de la capacité totale ou même encore la capacité nulle. De cette façon, toutes les cellules atteignent l'état de charge minimum autorisé au même instant.

En outre, comme cela a été mentionné précédemment, le classement permet de shunter temporairement une ou plusieurs cellules à des fins de diagnostic ou de calibration de l'état de charge tout en maintenant le fonctionnement normal du système de batterie. En figure 4, on a également représenté le déroulement de ces étapes 40, 41, 42 où : En cas de détection 40 d'une demande de diagnostic (calibration d'état de charge par exemple), le procédé comporte une étape d'assignation 41 à un module élémentaire d'une position d'exclusion dans le classement de sorte à exclure ledit module élémentaire dudit groupe de q modules durant une durée d'exclusion prédéterminée, puis une étape d'exécution 42 dudit diagnostic du module élémentaire durant la durée d'exclusion.

En figure 6, on a représenté une première application du procédé de commande selon l'invention dans le domaine de l'électromobilité pour un groupe motopropulseur de véhicule automobile comportant un système de batterie conformément à l'architecture à onduleurs intégrés telle que décrite en figure 1. Le véhicule peut être un véhicule hybride ou électrique muni d'une ou plusieurs machines électriques de traction (asynchrone, synchrone ou à courant continu) où la, ou chaque, machine est connectée électriquement au système de batterie. Le groupe motopropulseur 500 comporte un module 50 de génération d'une consigne de courant 51 envoyée à une boucle d'asservissement en courant. Le module de génération 50 délivre une consigne de courant en fonction d'une demande de couple issu de la pédale d'accélérateur du véhicule ou d'un module de pilotage automatique, tel qu'une fonction de régulation automatique de vitesse à partir d'une mesure de vitesse et de couple du train de roues moteur. De façon conventionnelle, la boucle d'asservissement en courant reçoit ladite consigne 51 et la mesure du courant généré 58 sur au moins une des lignes de courant de la batterie 56. La batterie 56 est connectée électriquement directement (sans convertisseur de tension intercalé électriquement) à au moins une machine électrique de traction 57 motorisant un train de roue 59 du véhicule, ainsi qu'à une interface de recharge (non représentée) sur un réseau électrique extérieur au véhicule, dans cet exemple en tension triphasée. L'architecture de la batterie ne nécessite pas l'usage d'un onduleur en sortie de ligne de la batterie.

La boucle d'asservissement comporte en outre un correcteur 52 délivrant une consigne de tension de référence 53 en fonction de la consigne 51 et de la mesure 58, à une unité de commande 54 de la batterie 56. L'unité de commande 54 délivre des consignes de commande 55 pilotant chaque module élémentaire de la batterie conformément au procédé de commande décrit précédemment en fonction de la consigne de tension pour maintenir l'équilibrage des cellules de la batterie, grâce au cyclage des cellules.

En figure 7, on a représenté une deuxième application du procédé de commande selon l'invention dans le domaine des batteries stationnaires où un système de batterie conformément à l'architecture à onduleurs intégrés telle décrite en figure 1 est connecté au réseau électrique (haute tension, très haute tension). Le système de batterie 600 reçoit une consigne 60 de puissance, résultant de demandes en puissance active (P) et puissance réactive (Q) devant être injectées sur le réseau électrique 70. Le système comporte en outre un module 61 de détermination de la consigne de courant 62 en amplitude et phase en fonction de la consigne 60 et d'une mesure de la tension 69 sur la ligne de courant en sortie de la batterie 67, et une boucle d'asservissement du courant comportant un correcteur 63 délivrant une consigne de tension de référence 64 en fonction d'une mesure de courant 68 sur une ligne de courant (ici triphasée) en sortie de la batterie 67, et de la consigne de courant 62. L'unité de commande 65 de la batterie 67 délivre des consignes de commande pour chaque module élémentaire de la batterie conformément au procédé de commande décrit précédemment en fonction de la consigne de tension de référence pour maintenir l'équilibrage des cellules grâce au cyclage des cellules.

Dans ce type d'application, le système 600 peut être piloté pour charger et décharger la batterie à partir du réseau électrique.

On récapitule maintenant les différents avantages techniques suivants du procédé de commande :

- Equilibrage dynamique des cellules pendant les phases de vie du véhicule : traction, recharge et décharge sur le réseau électrique secteur,

- Equilibrage de cellules pouvant présenter des états de vieillissement différents,

- Equilibrage de cellules présentant des capacités différentes,

- Equilibrage dynamique sans avoir recours à un dispositif spécifique à l'équilibrage mais en réutilisant les onduleurs locaux de chaque module élémentaire,

- Rendement d'équilibrage élevé (> 90%),

- Courant d'équilibrage égal au courant de cyclage de la batterie (courant de charge et de décharge de la batterie en fonctionnement),

**Revendications**

1. Procédé de commande d'une batterie (BAT) à cellules électrochimiques (CEk) permettant d'équilibrer les courants moyens traversant les cellules (CEk), la batterie (BAT) comportant au moins une ligne de courant (LT1), formée par une pluralité n de modules élémentaires (MEk) de cellule connectés en série, apte à délivrer une forme d'onde en tension, chaque module élémentaire (MEk) comprenant deux bornes de connexion (Bk1, Bk2), au moins une cellule (CEk) délivrant une tension élémentaire Vcell et un moyen de commutation (comk1, comk2) apte à piloter le module élémentaire (MEk) dans la ligne de courant (LT1) en fonction de trois états de pilotage différents permettant respectivement de délivrer aux dites bornes ladite tension élémentaire Vcell, une tension nulle et ladite tension Vcell inversée de sorte à réaliser une forme d'onde en tension (VM1), le procédé comportant :

   - une étape de pilotage (33) des signaux de commande (uik) des modules élémentaires (MEk) de sorte à fournir la forme d'onde en tension (VM1) à partir d'une sélection d'un groupe de q modules élémentaires (MEk) en fonction d'une consigne de tension de référence Vref, où Vref=qVcell,
   - La détermination (32) d'un classement (13) des n modules élémentaires, le procédé étant **caractérisé en ce qu'**il comporte en outre:
   - Le traitement (36) du classement de la pluralité n selon une permutation circulaire des positions (nk) des modules élémentaires (MEk) de sorte que chaque module élémentaire (MEk) de la pluralité n participe à réaliser la forme d'onde en tension (VM1), le traitement (36) du classement (13) selon la permutation circulaire étant exécuté en cas de détection en outre que la consigne de tension de référence Vref est inférieure à un seuil de tension prédéterminé et en cas de détection simultanée d'une consigne de courant de la ligne de courant qui est supérieure à un seuil de courant prédéterminé.

2. Procédé selon la revendication 1, **caractérisé en ce que** la permutation circulaire est exécutée à une fréquence de permutation supérieure à la fréquence de la consigne de tension de référence.

3. Procédé selon l'une quelconque des revendications 1 à 2, **caractérisé en ce qu'**il comporte en outre :

   - La détermination (31) de l'état de charge de chaque module élémentaire de la pluralité n et la détermination du classement (13) selon un ordre dépendant de l'état de charge de chaque module élémentaire (MEk),
   - Et **en ce que** le traitement du classement selon la permutation circulaire est exécuté seulement en cas de détection (35) que chaque module élémentaire de la pluralité n présente un écart d'état de charge, par rapport aux autres modules élémentaires, inférieur à un seuil minimum prédéterminé.

4. Procédé selon la revendication 3, **caractérisé en ce que** l'étape de détermination du classement (13) est déclenchée selon une période dont la valeur est dépendante de la vitesse de décharge et charge de la batterie (BAT) sur une durée prédéterminée.

5. Procédé selon la revendication 3 ou 4, **caractérisé en ce qu'**il comporte en outre, en cas de détection qu'au moins un module élémentaire de la pluralité n présente un écart d'état de charge par rapport aux autres modules élémentaires qui est supérieur à un seuil maximum prédéterminé, l'arrêt du traitement (36) du classement selon la permutation circulaire.

6. Procédé selon l'une quelconque des revendications 1 à 5, **caractérisé en ce qu'**il comporte en outre, en cas de détection que la capacité restante de la batterie (BAT) est inférieure à un seuil minimum prédéterminé, l'arrêt du traitement (36) du classement (13) selon la permutation circulaire.

7. Procédé selon la revendication 5 ou 6, **caractérisé en ce qu'**en cas de détection de l'arrêt du traitement du classement selon la permutation circulaire, l'étape de pilotage (33) consiste à connecter à la ligne de courant (LT1) les cellules dudit groupe de q modules élémentaires (MEk) ayant l'état de charge le plus élevé dans le classement (13) en cas de détection d'un courant de ligne de décharge, et à connecter les cellules dudit groupe de q modules élémentaires (MEk) ayant l'état de charge le moins élevé dans le classement (13) en cas de détection d'un courant de ligne de charge.

8. Procédé selon la revendication 7, **caractérisé en ce que** l'étape de pilotage (33) comporte les sous-étapes suivantes :

   - Lorsque le courant (la) de la ligne de courant (LT1) et la consigne de tension de référence Vref sont de même signe, le pilotage des modules élémentaires (MEk) de sorte à connecter à la ligne de courant (LT1) les cellules des modules élémentaires dont la position nk est comprise entre 1 et q,
   - Lorsque le courant (la) de la ligne de courant (LT1) et la consigne de tension de référence Vref sont de signe opposé, le pilotage des modules élémentaires (MEk) de sorte à connecter à la ligne de courant (LT1) les cellules des modules élémentaires (MEk) dont la position nk est comprise entre n-q et n.

9. Unité de commande (UMI) d'une batterie électrochimique (BAT) comportant au moins une ligne de courant (LT1), formée par une pluralité n de modules élémentaires (MEk) de cellule connectés en série, apte à délivrer une forme d'onde en tension (VM1), chaque module élémentaire (MEk) comprenant deux bornes de connexion (Bk1, Bk2), au moins une cellule (CEk) délivrant une tension élémentaire Vcell et un moyen de commutation (comk1, comk2) apte à piloter le module élémentaire (MEk) dans la ligne de courant (LT1) en fonction de trois états de pilotage différents permettant respectivement de délivrer aux dites bornes ladite tension élémentaire Vcell, une tension nulle et ladite tension Vcell inversée de sorte à réaliser la forme d'onde en tension (VM1), **caractérisée en ce que** l'unité de commande (UMI) est configurée pour mettre en oeuvre le procédé de commande permettant d'équilibrer les courants moyens traversant les cellules (CEk) selon l'une quelconque des revendications précédentes.

**Patentansprüche**

1. Verfahren zur Steuerung einer Batterie (BAT) mit elektrochemischen Zellen (CEk), die es ermöglicht, die durchschnittlichen durch die Zellen (CEk) fließenden Ströme auszugleichen, wobei die Batterie (BAT) mindestens eine Stromleitung (LT1) umfasst, die aus mehreren n besteht aus in Reihe geschalteten Elementarzellenmodulen (MEk), die eine Spannungswellenform liefern können, wobei jedes Elementarmodul (MEk) zwei Anschlussklemmen (Bk1, Bk2), mindestens eine Zelle (CEk), die eine Elementarspannung Vcell liefert, und Schaltmittel umfasst ( comk1, comk2), die in der Lage sind, das Elementarmodul (MEk) in der Stromleitung (LT1) gemäß drei unterschiedlichen Steuerzuständen zu steuern, was es ermöglicht, an die Anschlüsse die Elementarspannung Vcell, eine Nullspannung und eine invertierte Spannung Vcell zu liefern um eine Spannungswellenform (VM1) zu erzeugen, wobei das Verfahren Folgendes umfasst:

   - einen Schritt (33) zum Steuern der Steuersignale (uik) des Elementarmodule (MEk), um die Spannungswellenform (VM1) aus einer Auswahl einer Gruppe von q Elementarmodulen (MEk) als Funktion eines Referenzspannungssollwerts Vref bereitzustellen, wobei Vref = qVcell,
- Die Ermittlung (32) einer Klassifizierung (13) der n Module elementar, wobei das Verfahren **dadurch gekennzeichnet ist, dass** es weiterhin Folgendes umfasst:
- Die Verarbeitung (36) der Klassifizierung der Mehrzahl n gemäß einer zirkulären Permutation der Positionen (nk) der Elementarmodule (MEk), so dass jedes Elementarmodul (MEk) der Mehrzahl n an der Erzeugung der Spannungswellenform beteiligt ist ( VM1), wobei die Verarbeitung (36) der Klassifizierung (13) gemäß der zirkulären Permutation bei weiterer Erkennung, dass der Referenzspannungssollwert Vref kleiner als eine vorgegebene Spannungsschwelle ist, und bei gleichzeitiger Erkennung eines Stroms ausgeführt wird Sollwert der Stromleitung, der größer als eine vorgegebene Stromschwelle ist.

2. Verfahren nach Anspruch 1, **dadurch gekennzeichnet, dass** die zirkuläre Permutation mit einer Permutationsfrequenz durchgeführt wird, die größer ist als die Frequenz des Referenzspannungssollwerts.

3. Verfahren nach einem der Ansprüche 1 bis 2, **dadurch gekennzeichnet, dass** es außerdem Folgendes umfasst:

   - Die Bestimmung (31) des Ladezustands jedes Elementarmoduls der Mehrzahl n und die Bestimmung der Klassifizierung (13) in einer Reihenfolge, die vom Ladezustand jedes Moduls abhängt Grundschule (MEk),
   - Und dadurch, dass die Verarbeitung der Klassifizierung gemäß der zirkulären Permutation nur im Falle der Erkennung (35) ausgeführt wird, dass jedes Elementarmodul der Mehrzahl n einen geringeren Ladezustandsunterschied zu den anderen Elementarmodulen aufweist als ein vorgegebener Mindestschwellenwert.

4. Verfahren nach Anspruch 3, **dadurch gekennzeichnet, dass** der Schritt des Ermittelns der Klassifizierung (13) nach einem Zeitraum ausgelöst wird, dessen Wert von der Entlade- und Ladegeschwindigkeit abhängtdie Batterie (BAT) für eine vorgegebene Zeit.

5. Verfahren nach Anspruch 3 oder 4, **dadurch gekennzeichnet, dass** es außerdem umfasst, dass im Falle der Feststellung, dass mindestens ein Elementarmodul der Mehrzahl n einen Ladezustandsunterschied zu den anderen Elementarmodulen aufweist, der um einen vorbestimmten Wert größer ist Maximaler Schwellenwert, Stoppen der Verarbeitung (36) der Klassifizierung gemäß zirkuläre Permutation.

6. Verfahren nach einem der Ansprüche 1 bis 5, **dadurch gekennzeichnet, dass** es außerdem im Falle der Feststellung, dass die verbleibende Kapazität der Batterie (BAT) unter einem vorgegebenen Mindestschwellenwert liegt, das Stoppen der Klassifizierungsverarbeitung ( 36 ) umfasst. 13) gem zirkuläre Permutation.

7. Verfahren nach Anspruch 5 oder 6, **dadurch gekennzeichnet, dass** im Falle der Erkennung des Anhaltens der Klassifizierungsverarbeitung gemäß der zirkulären Permutation der Steuerschritt (33) darin besteht, die Zellen der Gruppe mit der aktuellen Zeile (LT1) zu verbinden von q Elementarmodulen (MEk) mit dem höchsten Ladezustand in der Klassifizierung (13) bei Erkennung eines Entladeleitungsstroms und beim Verbinden der Zellen der Gruppe von q Elementarmodulen (MEk) mit dem niedrigsten Ladezustand Ladung in der Rangfolge (13) bei Erkennung eines Lastleitungsstroms.

8. Verfahren nach Anspruch 7, **dadurch gekennzeichnet, dass** der Schritt Die Pilotierung (33) umfasst folgende Teilschritte:

   - Wenn der Strom (Ia) der Stromleitung (LT1) und der Referenzspannungssollwert Vref das gleiche Vorzeichen haben, erfolgt die Steuerung der Elementarmodule (MEk), um eine Verbindung zur Stromleitung (LT1) herzustellen
   Zellen der Elementarmodule, deren Position nk enthalten ist
   zwischen 1 und q,
   - Wenn der Strom (Ia) der Stromleitung (LT1) und der Referenzspannungssollwert Vref entgegengesetzte Vorzeichen haben, erfolgt die Steuerung der Elementarmodule (MEk), um die Zellen mit der Stromleitung (LT1) der Elementarmodule (MEk) zu verbinden ), dessen Position nk zwischen n-q und n liegt.

9. Steuereinheit (UMI) einer elektrochemischen Batterie (BAT), die mindestens eine Stromleitung (LT1) umfasst, die aus mehreren n in Reihe geschalteten Elementarzellenmodulen (MEk) besteht, die jeweils eine Wellenform in Spannung (VM1) liefern können Elementarmodul (MEk), das zwei Verbindungsklemmen (Bk1, Bk2), mindestens eine Zelle (CEk), die eine Elementarspannung Vcell liefert, und ein Schaltmittel (comk1, comk2) umfasst, das die Modulelementarspannung (MEk) in der Stromleitung steuern kann (LT1) als Funktion von drei verschiedenen Steuerzuständen, die es ermöglichen, an die Anschlüsse jeweils die Elementarspannung Vcell, eine Nullspannung und die invertierte Spannung Vcell zu liefern, um die Wellenform der Spannung (VM1) zu erzeugen, **dadurch gekennzeichnet, dass** die Steuerung Die Einheit (UMI) ist so konfiguriert, dass sie das Steuerverfahren implementiert, das es ermöglicht, die durchschnittlichen Ströme, die durch die Zellen (CEk) fließen, nach einem der vorhergehenden Ansprüche auszugleichen.

**Claims**

1.  Method for controlling a battery (BAT) with electrochemical cells (CEk) making it possible to balance the average currents passing through the cells (CEk), the battery (BAT) comprising at least one current line (LT1), formed by a plurality n of elementary cell modules (MEk) connected in series, capable of delivering a voltage waveform, each elementary module (MEk) comprising two connection terminals (Bk1, Bk2), at least one cell (CEk) delivering a elementary voltage Vcell and switching means (comk1, comk2) able to control the elementary module (MEk) in the current line (LT1) according to three different control states respectively making it possible to deliver said elementary voltage Vcell to said terminals, a zero voltage and said voltage Vcell inverted so as to produce a voltage waveform (VM1), the method comprising:

    - a step (33) for controlling the control signals (uik) of the elementary modules (MEk) so as to provide the voltage waveform (VM1) from a selection of a group of q elementary modules (MEk) as a function of a reference voltage setpoint Vref, where Vref =qVcell,
    - The determination (32) of a classification (13) of the n modules elementary,

    the method being **characterized in that** it further comprises :

    - The processing (36) of the classification of the plurality n according to a circular permutation of the positions (nk) of the elementary modules (MEk) so that each elementary module (MEk) of the plurality n participates in producing the voltage waveform (VM1), the processing (36) of the classification (13) according to the circular permutation being executed in the event of further detection that the reference voltage setpoint Vref is lower than a predetermined voltage threshold and in the event of simultaneous detection of a current setpoint of the current line which is greater than a predetermined current threshold.

2.  Method according to Claim 1, **characterized in that** the circular permutation is carried out at a permutation frequency greater than the frequency of the reference voltage setpoint.

3.  Process according to any one of Claims 1 to 2, **characterized in that** it further comprises :

    - The determination (31) of the state of charge of each elementary module of the plurality n and the determination of the classification (13)
    in an order dependent on the state of charge of each module elementary (MEk),
    - And **in that** the processing of the classification according to the circular permutation is executed only in the event of detection (35) that each elementary module of the plurality n has a difference in state of charge, with respect to the other elementary modules, less than one predetermined minimum threshold.

4.  Method according to Claim 3, **characterized in that** the step of determining the classification (13) is triggered according to a period whose value is dependent on the rate of discharge and charge of the battery (BAT) for a predetermined time.

5.  Method according to Claim 3 or 4, **characterized in that** it further comprises, in the event of detection that at least one elementary module of the plurality n has a difference in state of charge with respect to the other elementary modules which is greater at a predetermined maximum threshold, stopping processing (36) of the circular permutation classification.

6.  Method according to any one of Claims 1 to 5, **characterized in that** it further comprises, in the event of detection that the remaining capacity of the battery (BAT) is less than a predetermined minimum threshold, stopping the processing ( 36) of classification (13) according to circular permutation.

7. Method according to Claim 5 or 6, **characterized in that** in the event of detection of the stopping of the classification processing according to the circular permutation, the control step (33) consists in connecting to the current line (LT1) the cells of said group of q elementary modules (MEk) having the highest state of charge in the classification (13) in the event of detection of a discharge line current, and to connect the cells of said group of q elementary modules (MEk) having the state of lowest load in the ranking (13) when a load line current is detected.

8. Method according to claim 7, **characterized in that** the step of piloting (33) comprises the following sub-steps:

- When the current (la) of the current line (LT1) and the reference voltage setpoint Vref have the same sign, the control of the elementary modules (MEk) so as to connect to the current line (LT1) the cells of the elementary modules whose position nk is included between 1 and q,
- When the current (la) of the current line (LT1) and the reference voltage setpoint Vref have opposite signs, the control of the elementary modules (MEk) so as to connect the cells to the current line (LT1) elementary modules (MEk) whose position nk is between n-q and n.

9. Control unit (UMI) of an electrochemical battery (BAT) comprising at least one current line (LT1), formed by a plurality n of elementary cell modules (MEk) connected in series, capable of delivering a waveform in voltage (VM1), each elementary module (MEk) comprising two connection terminals (Bk1, Bk2), at least one cell (CEk) delivering an elementary voltage Vcell and a switching means (comk1, comk2) capable of controlling the module elementary voltage (MEk) in the current line (LT1) as a function of three different control states making it possible respectively to deliver to said terminals said elementary voltage Vcell, a zero voltage and said inverted voltage Vcell so as to produce the waveform in voltage (VM1), **characterized in that** the control unit (UMI) is configured to implement the control method making it possible to balance the average currents passing through the cells (CEk) according to any one of the preceding claims.

[Fig. 1]

[Fig. 2]

[Fig. 3]

[Fig. 4]

[Fig. 5]

Ia(A)

t (ms)

[Fig. 6]

Ia(A)

t (ms)

[Fig. 7]

[Fig. 8]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012117110 A2
- WO 2014145756 A1
- US 2014035361 A1
- WO 2018130020 A1
- WO 2018193173 A1
- WO 2018154206 A1